# EUROPEAN PATENT SPECIFICATION

(11) **EP 3 962 306 B1**
(45) Date of publication and mention of the grant of the patent: **25.11.2026**
(21) Application number: 20721258.0
(22) Date of filing: 30.04.2020
(51) Int. Cl.: A24F 40/60, A24F 40/40, A24F 40/20

(54) **AEROSOL GENERATION DEVICE WITH ILLUMINATED STATUS INDICATOR**
AEROSOLERZEUGUNGSVORRICHTUNG MIT BELEUCHTETER STATUSANZEIGE
DISPOSITIF DE GÉNÉRATION D'AÉROSOL AYANT UN INDICATEUR D'ÉTAT ÉCLAIRÉ

(30) Priority: 03.05.2019 EP 19172657
(43) Date of publication of application: 09.03.2022
(73) Proprietor: JT International SA, 1202 Geneva (CH)
(72) Inventor: BOUCHUIGUIR, Layth Sliman, 1293 Bellevue (CH); MASON, Jon, London Greater London W13 8QA (GB); PLEVNIK, Marko, London Greater London NW3 2JR (GB); LYELL, Nathan, Guildford Road, Woking Surrey GU22 7RN (GB)
(74) Representative: Serjeants LLP
(86) International application number: PCT/EP2020/062059
(87) International publication number: WO 2020/225099

(56) References cited:
- WO-A1-2018/166914
- CN-U- 204 317 509
- CN-U- 207 613 196
- CN-U- 207 855 022
- US-A1- 2016 331 029
- US-A1- 2019 069 602

## Description

### Field of Disclosure

The present disclosure relates to an aerosol generation device with an illuminated status indicator. The disclosure is particularly, but not exclusively, applicable to a portable aerosol generation device, which may be self-contained, and more particularly to a device that heats, rather than burns, tobacco or another suitable material by conduction, convection, and/or radiation, to generate an aerosol for inhalation.

### Background

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat or agitate an aerosol substrate to produce an aerosol and/or vapour for inhalation, as opposed to burning tobacco as in conventional tobacco products.

One type of reduced-risk or modified-risk device is a heated substrate aerosol generation device, or heat-not-burn device. Devices of this type generate an aerosol and/or vapour by heating a solid aerosol substrate, typically moist leaf tobacco, to a temperature typically in the range 150°C to 300°C. Heating an aerosol substrate, but not combusting or burning it, releases an aerosol and/or vapour that comprises the components sought by the user but not the toxic and carcinogenic by-products of combustion and burning. Furthermore, the aerosol and vapour produced by heating the aerosol substrate, e.g. tobacco, do not typically comprise the burnt or bitter taste resulting from combustion and burning that can be unpleasant for the user. This means that the aerosol substrate does not require sugars or other additives that are typically added to the tobacco of conventional tobacco products to make the smoke and/or vapour more palatable for the user.

Generally, a portion of aerosol substrate is provided in the aerosol generation device for use during a "smoking" session. Once the portion is expended, e.g. the useful release of aerosol and/or vapour from the portion is complete, the user's session is finished and a fresh portion of aerosol substrate is provided in the aerosol generation device in order to commence a further session. Portable aerosol generation devices are often carried by a user throughout the day, and can be used for multiple sessions subject to the limits of energy available in the device to produce the aerosol and/or vapour, e.g. battery capacity. It is therefore desirable to indicate to a user the battery level of the device, so that the user can maintain the device in a charged state. It can also be desirable to indicate to a user other useful information such as the remaining time in a session, e.g. until the portion of aerosol substrate is expended, or the heating status of the device or any other useful information (e.g. the correct substrate insertion, closure opening/closing status, error mode, wireless communication mode, etc.).

Portable aerosol generation devices are very personal to the user, being used frequently through the day and in an intimate manner, e.g. being closely handled and brought close to the user's face. The look and feel of the device is therefore very important, in particular how the user inputs any instruction, such as turning the device on or off, and how the device indicates its status to the user. So, the aesthetic properties of a status indicator of the device are of importance. At the same time, the aerosol generation device is generally small, meaning that having a compact, accurate and intuitive status indicator may be desirable, as well as ensuring any electrical power consumption of the status indicator is low. It will be appreciated that these requirements can conflict with one another.

CN207978948U describes an electronic cigarette device incorporating a single Light Emitting Diode (LED). This LED can only convey limited status information to a user. EP2727619 similarly describes an electronic vaporization device having a single LED. Various modes of illuminating the LED are described, including flashing and multiple colours. The preamble of claim 1 is derivable from CN207855022U.

### Summary of the disclosure

Aspects of the disclosure are set out in the accompanying claims.

According to the invention there is provided an aerosol generation device according to claim 1.

The provision of the light diffuser and the plurality of walls of the aerosol generation device may cause light directed through the non-opaque window from the array of light sources to appear as a block of light that increases smoothly in size as increasing numbers of adjacent light sources are illuminated. The walls may limit spillage of light along the array from individual light sources, whilst the diffuser may cause the light from adjacent or proximate light sources to combine so as to appear at the window as a contiguous or uniform area of light. This may allow a variety of information to be indicated to the user by the array in an elegant and visually appealing way.

The plurality of walls comprise a light diffusing material. The light diffuser may comprise the same light diffusing material as the plurality of walls. In one example, the light diffuser and the plurality of walls comprise a single contiguous piece.

Optionally, the light diffusing material is a white translucent material. It may be a polycarbonate material. In some examples, it is Makrolon^{®} or Lexan^{®}. In one particularly preferred example, the light diffusing material is RTP^{®} 0399X 120952 D S-27484 WHITE.

Optionally, the light sources may be configured to direct light towards the non-opaque window.

Optionally, the light diffuser may be configured to receive light from the light sources and transmit it towards the non-opaque window.

Optionally, the walls may be configured to receive light emitted obliquely from the light sources to limit spillage of the light from each light source along the array.

Optionally, the array of light sources is a linear array. For example, the array of light sources is arranged in a single (straight) line. The light sources of the array may be Light Emitting Diodes (LEDs).

Optionally, each wall of the plurality of walls extends to obstruct a straight path of light between adjacent light sources of the array.

Each light source of the array is surrounded by the light diffuser and one or more of the plurality of walls on all sides apart from a side of the light source facing in a direction opposite to a shortest direct path from the array of light sources to the non-opaque window.

Optionally, the light sources are spaced approximately 2 mm apart.

Optionally, each wall of the plurality of walls has a length in a direction of a shortest direct path from the array of light sources to the non-opaque window of approximately 0.5 mm.

Optionally, the light sources are located substantially directly behind the non-opaque window.

Optionally, the light diffuser may extend over the array of light sources and the window.

Optionally, the light diffuser may have a greater height and width than the array of light sources and the window.

Optionally, at least one surface of the light diffuser has a cladding. Optionally, at least one surface of the light diffuser has a coating. For example, the light diffusing material of the light diffuser may be clad or coated on at least one surface. The cladding or coating may have a different refractive index to the light diffuser.

Optionally, at least one surface of the light diffuser is a polished surface. At least one surface of the light diffuser may be a smooth or mirrored surface. For example, the light diffusing material of the light diffuser may be polished, smooth or mirrored on at least one surface.

Optionally, at least one surface of the light diffuser is white or near white. For example, the light diffusing material of the light diffuser may be opaque, near opaque or translucent on at least one surface.

Optionally, at least one surface of the light diffuser is a roughened surface. At least one surface of the light diffuser may be a coarse or frosted surface. For example, the light diffusing material of the light diffuser may be roughened, coarse or frosted on at least one surface.

In some conditions, slightly roughened surfaces may improve light transmission out of a body, and impede light transmission into the body. Conversely, smooth surfaces may impede light transmission out of a body (i.e. retention of light inside the body) but may improve light transmission into the body. For this reason, surfaces of the light diffuser closest to the light sources may be smooth or polished so as to improve transmission of light from the light sources to the light diffuser. Surfaces facing away from the light sources can be roughened to draw light out from the device, towards the exterior. Similarly, surfaces at the edges of the diffuser element may be polished or smooth to reduce leakage of light from the sides of the light diffuser. The side surfaces may further be provided with cladding to increase internal reflection at the sides and further reduce light leakage from the sides. Cladding typically has a lower refractive index than that of the material which it surrounds.

Optionally, the aerosol generation device comprises an optical element disposed between the light diffuser and the non-opaque window of the body. The optical element may be a light lens or a light filter. It may have a transmittance band between 400 nm and 700n m, or some other range within that band. For similar reasons as given above, the surfaces of the optical element may be roughened, smooth or polished. Side surfaces and surfaces closest to the light sources may be smooth or polished, while surfaces furthest from the light sources (closest to the exterior of the device) may be roughened. Cladding may also be applied at the sides (or edges) of the optical element to increase internal reflection at the edge and reduce light leakage at the edges of the optical element.

Optionally, the aerosol generation device comprises a power source. The power source may be electrical, e.g. a battery or cell.

Use of the words "apparatus", "device ", "processor", "module" and so on are intended to be general rather than specific. Whilst these features of the disclosure may be implemented using an individual component, such as a computer or a central processing unit (CPU), they can equally well be implemented using other suitable components or a combination of components. For example, they could be implemented using a hard-wired circuit or circuits, e.g. an integrated circuit, and using embedded software.

It should be noted that the term "comprising" as used in this document means "consisting at least in part of". So, when interpreting statements in this document that include the term "comprising", features other than that or those prefaced by the term may also be present. Related terms such as "comprise" and "comprises" are to be interpreted in the same manner. As used herein, "(s)" following a noun means the plural and/or singular forms of the noun.

As used herein, the term "aerosol" means a system of particles dispersed in the air or in a gas, such as mist, fog, or smoke. Accordingly the term "aerosolise" (or "aerosolize") means to make into an aerosol and/or to disperse as an aerosol. For the avoidance of doubt, aerosol is used to consistently describe mists or droplets comprising atomised, volatilised or vaporised particles. Aerosol also includes mists or droplets comprising any combination of atomised, volatilised or vaporised particles.

As used herein the term "non-opaque" means transparent or translucent in the visible spectrum of light, preferably such that transmittance in the visible spectrum is no more than 10%, more preferably no more than 5%, yet more preferably no more than 2%, or even 1%, for example about 0.5% at most. In cases where the walls between the light sources are opaque, for example, the opacity is such that substantially no light travels in a direct path between adjacent light sources. This is a function both of material type and material thickness, as well as the brightness of the light sources. In such circumstances, the aim is to transmit as little light as possible through the wall.

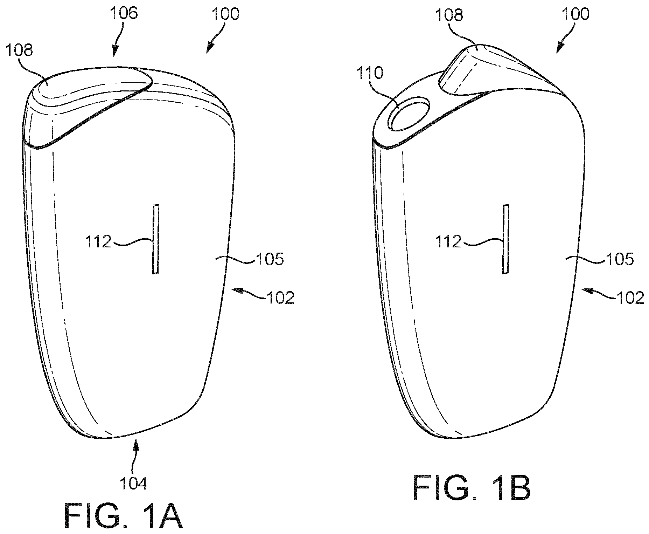

For clarity, throughout the application "height" refers to the vertical dimension with respect to the body of the device, for example, the distance between the top and bottom parts of the body is the body's height. "Width" is a distance as measured parallel to a side wall of the body, for example from front to back or from side to side (and in each case this is perpendicular to the height dimension). For example, the elongate window in the body shown in Figures 1A and 1B therefore has a much larger height than its width. "Depth" is a distance measured perpendicular to a side wall of the body, towards or away from the interior of the device so, for example, the inner casing is located deeper in the device than the outer casing, and the walls of the light diffuser extend deeper than the main body of the diffuser. In each case, the depth dimension is perpendicular to the height dimension. Additionally, the depth dimension is perpendicular to the local definition of the width dimension.

Preferred embodiments are now described, by way of example only, with reference to the accompanying drawings.

### Brief description of the drawings

Figures 1A and 1B are schematic illustrations of an aerosol generation device according to a first embodiment, with a closure in a closed position and with the closure in an open position.
Figure 2 is a schematic illustration of the aerosol generation device showing some internal components.
Figure 3 is a block diagram of the electronics of the aerosol generation device.
Figure 4 is a schematic cross-sectional view of an array of light sources, a light diffuser and a window according to a first preferred embodiment.
Figure 5 is a schematic illustration of the light diffuser according to the first preferred embodiment.
Figure 6 is a schematic cross-sectional view of the status indicator according to the first preferred embodiment.
Figure 7 is an exploded schematic cross-sectional view of the status indicator of Figure 6.
Figure 8 is a schematic cross-sectional view of the status indicator along line A-A of Figure 6.
Figure 9 is a schematic cross-sectional view of an array of light sources, a light diffuser and a window according to a second preferred embodiment.
Figure 10 is a schematic illustration of the light diffuser according to the second preferred embodiment.
Figure 11 is a schematic cross-sectional view of the status indicator according to the second preferred embodiment.
Figure 12 is an exploded schematic cross-sectional view of the status indicator of Figure 11.
Figure 13 is a schematic cross-sectional view of the status indicator along line B-B of Figure 11.
Figure 14 is a schematic illustration of the aerosol generation device with the closure in the closed position and the status indicator off.
Figures 15A to 15C are schematic illustrations of the aerosol generation device, with the status indicator indicating different power source charge levels.
Figures 16A to 16C are schematic illustrations of the aerosol generation device, with the status indicator indicating different remaining session times.

### Detailed description

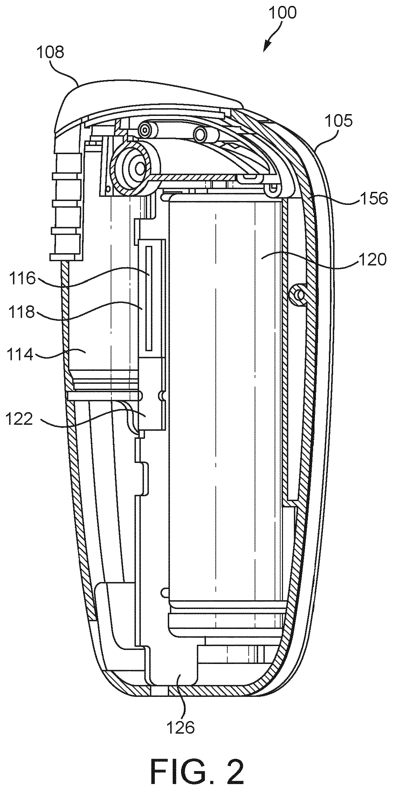

Referring to Figures 1A, 1B and 2, an aerosol generation device 100 has a body 102 that comprises an outer casing 105 housing various components. An aperture 110 is provided in the body 102, e.g. in a side wall of the outer casing 105, through which an aerosol substrate (not shown) can be inserted into a heating chamber 114. In the present embodiment, the aerosol substrate is provided in a substrate carrier. The substrate carrier is generally elongate, and the aerosol substrate is located towards a first end of the substrate carrier. Between the aerosol substrate and a second end of the substrate carrier, the substrate carrier provides a conduit, e.g. in the form of a tube of cardboard or plastics material, optionally with a filter provided along its length, e.g. at the second end of the substrate carrier. Aerosol and/or vapour generated from the aerosol substrate as it is heated in the heating chamber 114 can be drawn through the conduit and inhaled by a user from the second end of the substrate carrier, which has sufficient length to protrude from the aperture 110 with the aerosol substrate located in the heating chamber 114.

The aerosol generation device 100 may be described as a personal inhaler device, an electronic cigarette (or e-cigarette), vaporiser or vaping device. In the illustrated embodiment, the aerosol generation device 100 is a Heat not Burn (HnB) device. However, aerosol generation devices 100 that are envisaged in the disclosure more generally heat or agitate an aerosolisable substance to generate an aerosol for inhalation, as opposed to burning tobacco as in conventional tobacco products.

The aerosol substrate and substrate carrier may be referred to as a consumable item. In the illustrated embodiment, the consumable item may be in the form of a rod that contains processed tobacco material, e.g. a crimped sheet or oriented strips of Reconstituted ToBacco (RTB) paper impregnated with a liquid aerosol former. The liquid aerosol former in the present embodiment comprises Vegetable Glycerine (VG) but may be a mixture of Propylene Glycol (PG) and VG. In the present embodiment, the consumable item uses pure VG, which does not contain any flavourings or nicotine. Instead, volatile flavourings and nicotine derived from the RTB are vaporised at the same time as the aerosol former and is entrained into the resulting condensation aerosol for inhalation by the user. However, in other embodiments, the consumable item has aerosol former containing nicotine and other flavourings. In such cases the consumable item typically contains other solid porous matter to absorb the aerosol former liquid, for example a mousse formed with a gelling agent and a suitable binder which may or may not contain tobacco. In alternative embodiments, the consumable item is a capsule containing aerosol former stored in a reservoir and having a vaporisation chamber whereby liquid from the reservoir is heated by the aerosol generation device 100, e.g. via a wick, a heat transfer element or a dosing element that transports a small dosage of liquid aerosol former to a heated vaporisation surface. Preferably the aerosol former comprises VG or a PG/VG mixture together with nicotine and/or flavourings.

It can be seen from the drawings that the body 102 is a substantially round edged rectangular prism shape. However, this is inessential and in other embodiments the body 102 does not have a rectangular prism shape, but is instead any shape appropriate for fitting the internal components described in the various embodiments set out herein.

The body 102 can be formed of any suitable material, or indeed layers of material. In the illustrated embodiment, the aerosol generation device 100 has an inner casing 156 covered by the outer casing 105. The inner casing 156 can be a plastics material and the outer casing 105 can be metal or vice versa, or both inner casing 156 and outer casing 105 may be essentially made of plastics material. If the material of the outer casing 105 is metallic, it may be anodized, powder coated or treated so as to make it more scratch-resistant and to prevent unsightly wear and tear. This allows the aerosol generation device 100 to maintain a 'new' and an aesthetically pleasing appearance.

A first end 104 of the aerosol generation device 100, shown towards the bottom of Figure 1A, is described for convenience as a bottom, base or lower end of the aerosol generation device 100. A second end 106 of the aerosol generation device 100, shown towards the top of Figure 1A, is described as the top or upper end of the aerosol generation device 100. During use, the user typically orients the aerosol generation device 100 with the first end 104 downward and/or in a distal position with respect to the user's mouth and the second end 106 upward and/or in a proximal position with respect to the user's mouth. The aperture 110 is therefore positioned at the second end 106 of the aerosol generation device 100.

The aerosol generation device 100 has a closure 108 for covering the aperture 110. The closure 108 might be considered to be a door for the aperture 110. The closure 108 is configured selectively to cover and uncover the aperture 110, such that the aperture 110 is substantially closed and open depending upon the position of the closure 108.

In more detail, the closure 108 is arranged to move between a closed position, as illustrated in Figure 1A, and an open position, as illustrated in Figure 1B. The closure 108 is arranged to move over the second end 106 of the body 102 between the closed position and the open position, that is, across a width of the aerosol generation device 100. In the closed position, as shown in Figure 1A, the aperture 110 is covered or obstructed at least partially by the closure 108. Preferably, the aperture 110 is completely covered by the closure 108. In some embodiments, when the closure 108 is in the closed position, the closure 108 creates a seal over the aperture 110, e.g. such that dust and moisture are prevented from entering the aperture 110. In the open position, as shown in Figure 1B, the aperture 110 is uncovered or unobstructed by the closure 108. This means that the closure 108 does not obscure the aperture 110 and the user is able to access the aperture 110 and in particular is able to insert the substrate carrier into the heating chamber 114.

In some embodiments, the closure 108 may also have a further position, e.g. a third position or activation position. The activation position is accessible by the user, for example, by depressing the closure 108 towards the body 102 whilst the closure 108 is in the open position. That is, from the open position the user operates the closure 108 to enter the activation position. The activation position provides a user input to the aerosol generating device 100, in response to which the aerosol generation device 100 is arranged to perform an action, e.g. to begin the process of heating the aerosol substrate and generating aerosol for the user to inhale. In other embodiments the aerosol generation device 100 is arranged to activate in response to an alternative form of user input. For example, in embodiments in which the closure 108 has no activation position, a button or switch may be provided on a side of the body 102 and the user input can be initiated by depressing the button or flicking the switch. Other suitable methods of providing a means for receiving user input are provided in different embodiments.

In some embodiments, the aerosol generation device 100 has a detector (not shown) arranged to detect movement or a position of the closure 108. In one embodiment, the detector is arranged to detect movement of the closure 108 from the closed position to the open position. In an alternative embodiment, the detector is arranged to detect the absolute position of the closure 108, e.g. at the open position. In a further alternative embodiment, the detector is configured to detect both when the closure 108 is in the closed position and when the closure 108 is in the open position. The detector might be further arranged to detect movement of the closure 108 from the open position to the activation position. To detect the movement or position of the closure, the detector comprises a sensor. The sensor is configured to sense the movement or position of the closure 108. The sensor is preferably a contactless sensor. Alternatively described, the detector acts as a position sensor for the closure 108.

The detector is configured to output a signal indicative of the position of the closure 108. The signal can be used similarly to the user input initiated by the closure 108 moving to the activation position. For example, movement of the closure 108 from the closed position to the open position may activate the aerosol generation device 100.

A non-opaque window 112 is provided in a side of the aerosol generation device 100, through the body 102 of the aerosol generation device 100. The non-opaque window 112 is located towards the second end 106 of the aerosol generation device 100 on a side wall of the aerosol generation device 100 and central of the width of the side wall. The non-opaque window 112 comprises an aperture in the body 102 of the aerosol generation device 100. The non-opaque window 112 might be covered or filled with a translucent or transparent material or no material at all. In the illustrated embodiment, the window 112 is an elongate shape. The window 112 can be linear or non-linear. It can be a rectangular shape, preferably with rounded corners, e.g. corners having a radius. The longer straight parallel edges extend parallel to the height of the aerosol generation device 100, e.g. in a direction between the first end 104 and the second end 106. A bottom edge of the non-opaque window is towards the first end 104 of the aerosol generation device 100 and a top edge of the non-opaque window 112 is towards the second end 106 of the aerosol generation device 100. The top edge of the window 112 is closer to the second end 106 of the body 102 than the bottom edge of the window 112 is to the first end 104 of the body 102. This provides for a region towards the first end 104 of the device 100 where the device 100 can be gripped by a user such that the window 112 is less likely to be obstructed by the user's hand, allowing the user to observe the information displayed via the window 112 while holding the device 100.

The non-opaque window 112 is configured such that light emitted from light sources 146 internal to the body 102 of the device 100 is visible to a user through the window 112. As an example light sources 146 (for example RGB LEDs or other suitable light sources) may be provided interior to the body 102 to indicate the status of the aerosol generation device 100. In this context, status may mean one or more of: battery power remaining, heater status (e.g. on, off, error, etc.), device status (e.g. ready to take a puff, or not), or other indication of status, for example error modes, indications of the number of puffs or entire substrate carriers consumed or remaining until the power supply is depleted, and so on.

Figure 2 shows a cut away view of the aerosol generation device 100, such that more of the internal components can be seen. As illustrated, the aerosol generation device 100 comprises the heating chamber 114, a light diffuser 118 and an optical element 116, a power source 120 (e.g. a battery) and PCBs 122 and 126.

In preferred embodiments, the aerosol generation device 100 is electrically powered. That is, it is arranged to heat the aerosol substrate using electrical power. For this purpose, the aerosol generation device 100 has an electrical power source 120, e.g. a battery. The power source 120 is coupled to control circuitry, which may be housed at least in part on one or both of the PCBs 122 and 126. The control circuitry is also coupled to at least the heating chamber 114 and the light sources 146 of the status indicator. The user operable closure 108 may be arranged to cause coupling and uncoupling of the electrical power source 120 to a heater which is configured to supply heat to the heating chamber 114 and/or the light sources 146 via the control circuitry.

In general the window 112 and the light diffuser 118 have shapes and sizes corresponding with one another. Similarly, the light sources 146 are arranged in broadly the same shape, and over a region of broadly the same size as the window 112. In other words the light diffuser 118 does not extend large distances beyond the window, and the light sources 146 are located substantially directly behind the window (closer to the interior of the device 100 than the window 112 is, or "deeper" in the terminology described above). This in turn helps to ensure that the light sources 146 provide light through the window 112 in an efficient manner, as the majority of the light emitted by the light sources 146 is transmitted through the window 112 (rather than being emitted inside the casing 105, 156), having been diffused by the light diffuser 118.

In addition, the light sources 146 extending over a region broadly the same size and shape as the window 112, and the light diffuser 118 having a broadly corresponding shape and size (for example at least as big) as the window 112 means that it is possible for emitted light to be transmitted through substantially the whole of the window 112 (for example when light sources 146 corresponding to that part of the window are emitting light).

A balance is struck between maximising the emitted light which is transmitted through the window 112 (neither the light diffuser 118 nor the region containing light sources 146 is appreciably larger than the window 112) and ensuring the whole of the window 112 is able to emit light (neither the light diffuser 118 nor the region containing light sources 146 is appreciably smaller than the window 112).

As noted above, the window 112, the light diffuser 118 and the region in which the light sources 146 are arranged in general all have shapes and sizes corresponding broadly with one another. Collectively, these elements form part of the status indicator and for the present discussion of the arrangement of the status indicator, it should be appreciated that the shape and size of the window 112, light diffuser 118 and the arrangement of the light sources 146 will be adapted accordingly. Once a shape and size has been decided upon, the arrangement of the elements forming the status indicator is straightforward for the skilled person to implement.

The status indicator in general will be elongate. For example it has a length direction, and a width direction, such that the width is much less than the length. For example, the length may be 3, 5, 10, 25 or even 50 times the width. The length direction is a straight line in some cases (e.g. as in Figures 1A and 1B), but in other cases the length direction may be a curve, an arc, a series of arcs, a series of straight lines, a branching structure, a spiral, a closed loop or any combination of these. In cases where the length direction is not constant along the length of the status indicator (for example due to curved or angled sections), the width is locally defined as transverse to the length direction. In some cases, the width may not be constant along the length of the status indicator, for example the status indicator may bulge to wider parts or thin to narrower parts. In such cases it is the average width of the status indicator which is much narrower than the length of the status indicator.

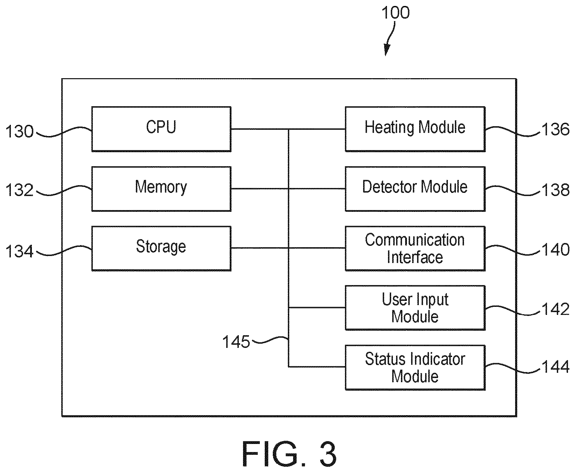

Referring to Figure 3, the aerosol generation device 100 comprises a Central Processing Unit (CPU) 130, memory 132, storage 134, a heating module 136, a detector module 138, a communication interface 140, a user input module 142 and a status indicator module 144 coupled to one another by a communication bus 145.

The CPU 130 is a computer processor, e.g. a microprocessor. It is arranged to execute instructions in the form of computer executable code, including instructions stored in the memory 132 and the storage 134. The instructions executed by the CPU 130 include instructions for coordinating operation of the other components of the aerosol generation device 100, such as instructions for controlling the status indicator module 144 in dependence on one or more variables, e.g. the battery level and/or signals from the other modules. In an example, when the device 100 is activated by the user by moving the closure 108 to an activation position, the detector module 138 will interrupt the CPU 130 to indicate to the CPU 130 that the aerosol generation device 100 has been activated. The device 100 may also or alternatively be activated by another means of user input. In this example, the CPU 130 is configured to enable the heating module 136 to activate the heating chamber 114 to generate aerosol and therefore enable a user to inhale the aerosol with the device 100 in the activated state. In this example the CPU 130 may provide instruction to the status indicator module 144 to enable the status indicator to indicate a status of the heater which is configured to supply heat to the heating chamber 114.

The memory 132 is implemented as one or more memory units providing Random Access Memory (RAM) for the aerosol generation device 100. In the illustrated embodiment, the memory 132 is a volatile memory, for example in the form of an on-chip RAM integrated with the CPU 130 using System-on-Chip (SoC) architecture. However, in other embodiments, the memory 132 is separate from the CPU 130. The memory 132 is arranged to store the instructions processed by the CPU 130 in the form of computer executable code. Typically, only selected elements of the computer executable code are stored by the memory 132 at any one time, which selected elements define the instructions essential to the operations of the aerosol generation device 100 being carried out at the particular time. In other words, the computer executable code is stored transiently in the memory 132 whilst some particular process is handled by the CPU 130.

The storage 134 is provided integrally with the aerosol generation device 100, in the form of a non-volatile memory. The storage 134 is in most embodiments embedded on the same chip as the CPU 130 and the memory 132, using SoC architecture, e.g. by being implemented as a Multiple-Time Programmable (MTP) array. However, in other embodiments, the storage 134 is an embedded or external flash memory, or such like. The storage 134 stores computer executable code defining the instructions processed by the CPU 130. The storage 134 stores the computer executable code permanently or semi-permanently, e.g. until overwritten. That is, the computer executable code is stored in the storage 134 non-transiently. Typically, the computer executable code stored by the storage 134 relates to instructions fundamental to the operation of the CPU 130, communication interface 140, and the aerosol generation device 100 more generally, as well as to applications performing higher-level functionality of the aerosol generation device 100 and data relating to such applications.

A detector module 138 is coupled to a detector. The detector module 138 receives signals indicative of the position, status or movement of the closure 108 from the detector and provides signals indicative of the position, status, and/or movement of the closure 108 to the CPU 130. For example, when the closure 108 is in the open position, the detector module 138 will interrupt the CPU 130 to indicate to the CPU 130 that the closure 108 is in the open position. In an example, with the closure 108 in the open position the CPU 130 is configured to enable the status indicator module 144 to operate the status indicator to indicate to the user the remaining battery level of the device 100.

The communication interface 140 supports short-range wireless communication, in particular Bluetooth^{®} communication. In particular, the communications interface 140 is configured to establish a short-range wireless communication connection with a personal computing device of the user. The communication interface is coupled to an antenna (not shown) in some embodiments, via which antenna wireless communications are transmitted and received over the short range wireless communication connection. It is also arranged to communicate with the CPU 130 via the communication bus 145.

The user input module 142 is coupled to a user input device. The user input device may be a button or switch or any suitable arrangement for accepting a user input action. In particular, the user input module 142 may be provided when the closure 108 is not configured to have an activation position and the aerosol generation device 100 is activated by the user via the user input device. The user input module 142 is coupled to the user input device and receives signals indicative of the state of the user input device and provides signals indicative of the user input to the CPU 130.

The status indicator module 144 is configured to provide information on a status of the device 100 to the user. In this embodiment, the status indicator module 144 comprises an LED interface. The status indicator module 144 is configured to receive information on the status of the device 100 from the CPU 130 and indicate to the CPU 130 a state of the light sources 146 of the status indicator which display the information to the user.

The positions of the closure 108 and/or the provision of a user input device provide the ability for the closure 108 or a user input to trigger or provide multiple functions. This enhances the user experience and improves usability. In an example with the closure 108 having three positions, the three positions provide the following states for the aerosol generation device 100 to function:
1) "off",
2) "standby" or "load", and
3) "active" or "use" or "aerosolise".

A person skilled in the art will appreciate that other functions may be possible for the aerosol generation device 100. For example, one function may provide temperature adjustment, or may provide an indication of amount of consumable left, or provide an indication of a battery level, or lock or unlock a parental lock. It will be appreciated that the status indicator and status indicator module 144 may be configured to indicate the status of any one or all of these functions.

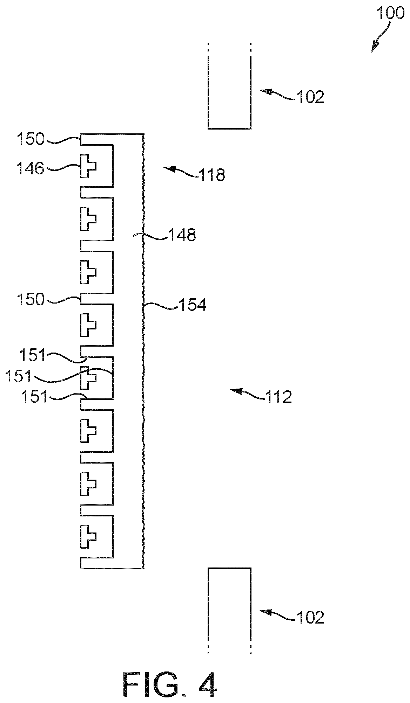

Figure 4 shows a schematic cross sectional view of a first preferred embodiment of the light sources 146 and light diffuser 118 of the status indicator. The light sources 146 are located in an interior region of the body 102. The light sources 146 are arranged in an array. In the illustrated embodiment the light sources 146 are arranged in a linear array of eight individual light sources 146. Each light source 146 in the array is an LED, preferably an RGB LED. RGB LEDs can be used to display any colour of light, including white. In some examples RGB LEDs may be used to display different colours to alert a user to a different parameter. For example battery life, time remaining in a heating cycle, battery charging progress, etc. can all have different colours. In other cases, the light sources 146 can be LEDs or other light sources arranged to operate at a single colour.

In the preferred embodiment the linear array is arranged to be aligned with the non-opaque window 112 of the body, thus the linear array is arranged vertically with respect to the body 102. In alternative embodiments, the array of light sources 146 may be arranged to be inclined or horizontally aligned with the body 102. The light sources 146 are configured, when illuminated, to emit light generally towards the window 112 of the body. It will be appreciated that bilinear or two dimensional arrangements of light sources 146 are possible, and even more complex multidimensional arrays may also be feasible. It will also be appreciated that the array of light sources 146 may not be linear but curved, e.g. forming one or several curved sections.

In preferred embodiments of the disclosure the light sources 146 are spaced less than 10 mm apart, preferably less than 5 mm apart, more preferably less than 3 mm apart, yet more preferably less than 2.5 mm apart. In the preferred embodiment the light sources 146 are equally spaced approximately 2 mm (specifically 2.15 mm) apart, that is from centre to centre of each light source 146. In a possible alternative, the light sources 146 can be spaced apart with a progressively increasing distance between adjacent light sources 146 in e.g. one direction.

A light diffuser 118 is also provided in an interior region of the aerosol generation device 100. In the illustrated embodiment, the light diffuser 118 is aligned with the array of light sources 146 and disposed between the light sources 146 and the window 112. The light diffuser 118 has a cuboid or rectangular prism shaped main body 148, one side of which faces the window 112 and one side of which faces the array of light sources 146. In the first preferred embodiment the main body 148 of the light diffuser 118 covers the extent of the window 112 (from a side of the window 112 facing inwardly of the body 102).

The width and height of the light diffuser 118 can be varied to change the proportion of the light field of the light sources 146 incident on the light diffuser 118. A taller and wider light diffuser 118 receives a greater proportion of the emitted light from the light sources 146. That is, the greater the extent of the light diffuser 118 in a direction across a light path from the light sources 146 to the window 112, the more light from the light sources 146 may be incident upon it. The main body 148 of the light diffuser 118 is less than 50 mm in height, preferably less than 30 mm in height, more preferably less than 20 mm in height, and in the first preferred embodiment is approximately 16 mm in height (specifically 16.6 mm). The main body 148 of the light diffuser 118 is less than 10 mm in width, preferably less than 5 mm in width; more preferably less than 3 mm in width; yet more preferably is approximately 2.6 mm in width according to the first preferred embodiment.

The main body 148 of the light diffuser 118 is less than 3 mm in depth, preferably less than 2 mm in depth, more preferably less than 1 mm in depth, yet more preferably less than 0.75 mm in depth. In the first preferred embodiment the main body 148 of the light diffuser 118 is approximately 0.5 mm in depth (specifically 0.55 mm). In this context, depth may be the extent of the light diffuser 118 along the light path from the light sources 146 to the window 112, specifically, the shortest such path.

The parameters of the status indicator (dimensions, material types, light source 146 spacing and number, etc.) are all interrelated, in the sense that the exact size and shape of one element, once fixed, will impact on the size of the other elements. In general making one element larger will result in the other elements also becoming larger. In theory, the entire device can be scaled in size keeping the proportions the same, within a limited range of scale factors. In doing this, an important parameter is the spacing between light sources 146. In order to provide a smooth blurring between adjacent light sources 146, the spacing cannot be too large or there will be notable dimmer patches between adjacent light sources 146. To a degree this can be balanced by using brighter light sources 146 and/or altering the diffusivity of the light diffuser 118. In other cases, the solution may be to retain the light source 146 spacing of around 2 mm centre to centre, and provide more light sources 146 for larger versions of the status indicator or fewer light sources 146 for smaller versions of the status indicator.

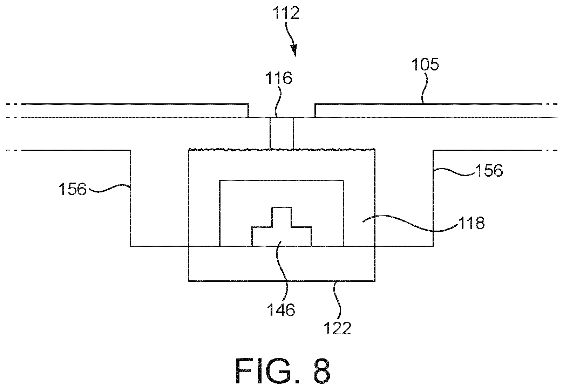

The status indicator also comprises walls 150 that extend between a side of the light diffuser 118 facing the array of light sources 146, and the array of light sources 146 itself. In this first preferred embodiment the walls 150 are of the same material as the main body 148 of the light diffuser 118 and form part of a single structure with the main body 148 of the light diffuser 118. In other words, the walls 150 protrude from the main body of the light diffuser 118 such that the main body 148 of the light diffuser 118 and the walls 150 form a single contiguous piece. In the first preferred embodiment illustrated in Figures 4 to 9, the single contiguous piece comprising the main body 148 of the light diffuser 118 and the walls 150 is referred to as a whole as the light diffuser 118. The walls 150 of the light diffuser 118 extend between the light sources 146 in the array.

The walls 150 define portions of the light diffuser 118 in the first embodiment which extend closer to the plane of the array of light sources 146 than the main body 148 of the light diffuser 118. The walls 150 extend a greater depth into the interior of the aerosol generation device 100 away from the window 112 in the body 102 than the main body 148 of the light diffuser 118.

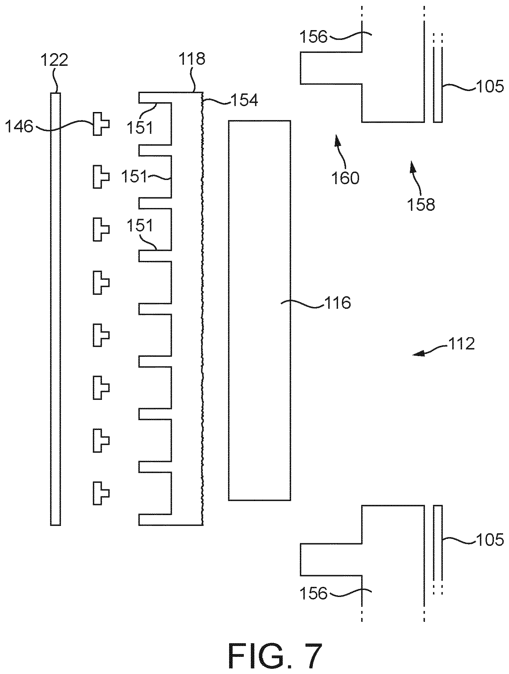

The light diffuser 118 is thus configured to receive light emitted obliquely from the light sources 146 at the surfaces 151 of its walls 150 facing the light sources 146. It will be appreciated that the points of incidence of the obliquely emitted light on the light diffuser 118 might be closer to the light source 146 than if such walls 150 were not provided. As illustrated in Figures 4 and 7, the walls 150 completely obstruct light paths between adjacent light sources 146, although it will be appreciated that the walls 150 may extend to obstruct only a subset of such light paths or none at all.

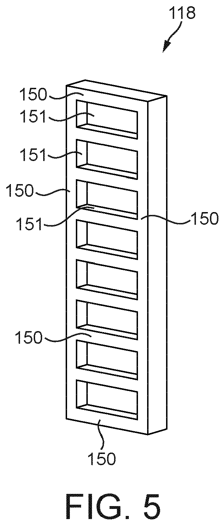

The light diffuser 118 may also comprise a further wall 150 above the uppermost light source 146 in the array and another further wall 150 below the lowermost light source 146 in the array. In other words, the further walls 150 may be provided at each end of the array of light sources. These further (or peripheral) walls 150 serve to receive light emitted obliquely by the uppermost and lowermost (e.g. endmost) light sources 146 of the array, which would otherwise leak into the surrounding areas above and below (e.g. at each end of) the light diffuser 118. The light diffuser 118 may also comprise walls 150 extending from the lateral edges of the side of the light diffuser 118 facing the walls 150 disposed between the light sources 146, as shown left most and right most in Figure 5 extending from the top to the bottom (e.g. along the length) of the light diffuser 118. These might be referred to as side walls.

The walls 150 of the light diffuser 118 extend less than 2 mm in depth from the main body 148 of the light diffuser 118 towards the array of light sources 146, preferably by less than 1 mm, more preferably less than 0.75 mm. In this first preferred embodiment, the walls 150 extend approximately 0.5 mm in depth from the main body 148 of the light diffuser 118. The walls 150 of the light diffuser 118 are less than 2 mm thick, preferably less than 1 mm thick, more preferably less than 0.5 mm thick, yet more preferably approximately 0.1 mm thick. In this context, "thickness" of the walls 150 is usually in the length dimension as defined above, but in any case is the dimension of a wall 150 in the direction between adjacent light sources 146.

The light diffuser 118 is configured to receive light from the light sources 146 and transmit light towards the window 112. Therefore it may be advantageous for the light diffuser 118 to be configured to prevent light leaking out of one or more of its surfaces which are not facing either the light sources 146 or the window 112. For example, the surfaces of the top and bottom ends of the light diffuser 118 may be clad by a cladding of a material of lower refractive index that the light diffuser 118. The external lateral surfaces of the light diffuser 118 may also be clad. The interface of the light diffuser 118 and the cladding is configured to cause total internal reflection for light incident at angles less than the critical angle defined by the refractive indices of the light diffuser 118 material and the cladding material. This will reduce the amount of light that is able to leak out of the top and bottom ends of the light diffuser 118 and/or the sides of the light diffuser 118, thus reducing energy wasted in producing light that will not be visible to the user through the window 112. Alternatively or in addition, one or more of the surfaces of the light diffuser 118 can be finished so as to be opaque or translucent to prevent or reduce light leaking out through said surface. The opaque or translucent surface may also provide diffuse internal reflection of any light incident on it.

The light diffuser 118 is configured to diffuse light. The light diffuser 118 may be made of a light diffusing material. The light diffuser 118 may also be formed of a non-opaque material whose surface finishing promotes diffusion of light transmitted therethrough. Variation of various properties of the light diffuser 118 including, but not limited to, its material, shape, dimensions, surface finishing (polishing, frosting, coating, treating or roughening) and cladding, will affect the degree to which the light is diffused or scattered. In the first preferred embodiment the light diffuser 118 comprises a roughened surface 154 on the side of the light diffuser 118 facing away from the walls 150. Light emitted through this surface is diffused or scattered as it leaves the light diffuser 118 through the roughened surface 154 towards the window 112. In the first embodiment the light diffuser 118 is formed of a diffusing material. That is, the material of the light diffuser 118 may provide diffusion of light within its bulk (i.e. inside the material) by being configured to scatter light that passes through it instead of, or in addition to, having a roughened surface 154. The internal faces 151 of the diffuser, i.e. the surfaces of the walls 150 upon which light from the light sources 146 is incident, may be polished or glossed which promotes light entering the light diffuser 118 from the light sources 146. The roughened surface may be roughened to VDI values of between 21 to 30, for example.

In some conditions, slightly roughened surfaces may improve light transmission out of a body, and impede light transmission into the body. Conversely, smooth surfaces may impede light transmission out of a body (i.e. retention of light inside the body) but may improve light transmission into the body. For this reason, surfaces of the light diffuser 118 closest to the light sources 146 may be smooth or polished so as to improve transmission of light from the light sources 146 through to the light diffuser 118. Surfaces facing away from the light sources 146 can be roughened to draw light out from the device 100 towards the exterior. Similarly, surfaces at the edges of the light diffuser 118 may be polished or smooth to reduce leakage of light from the sides of the light diffuser 118. The side surfaces may further be provided with cladding to increase internal reflection at the sides and further reduce light leakage from the sides. Cladding typically has a lower refractive index than that of the material which it surrounds.

For similar reasons as given above, the surfaces of the optical element 116 may be roughened, smooth or polished. Side surfaces and surfaces closest to the light sources 146 may be smooth or polished, while surfaces furthest from the light sources 146 (closest to the exterior of the device) may be roughened. Cladding (not shown) may also be applied at the sides (or edges) of the optical element 116 to increase internal reflection at the edge and reduce light leakage at the edges of the optical element 116.

A light diffuser 118 that receives light from a light source 146 and transmits the light towards an intended target is said to be disposed between them. A simple arrangement achieving such an effect is the illustrated arrangement of the array of light sources 146, the light diffuser 118 and the non-opaque window 112 being substantially parallel and aligned, with the light diffuser 118 in between the light sources 146 and the non-opaque window 112. However in alternative embodiments, the light from the light sources 146 might be refracted, reflected or guided by other optical components (such as: lenses, mirrors, light pipes, optical fibres, etc.) such that the light diffuser 118 receives it even if the light diffuser 118 is not substantially aligned with the array of light sources 146. Similarly, light leaving the light diffuser 118 can be refracted, reflected or guided by optical components to be directed to the non-opaque window 112. It will be appreciated that in describing the light diffuser 118 to be disposed between the light sources 146 and the non-opaque window 112 such arrangements are envisaged.

A perspective view of a preferred embodiment of the light diffuser 118 is shown in Figure 5. In the illustrated embodiment the walls 150 of the light diffuser 118 are configured to extend between adjacent light sources 146 and to extend around the periphery of the surface of the main body 148 of the light diffuser 118 closest to the array of light sources 146. In the preferred embodiment the walls 150 extending between the light sources 146 extend across the width of the main body 148 of the light diffuser 118 perpendicular to the orientation of the linear array of light sources 146.

This preferred configuration of the light diffuser 118 defines a series of voids or recesses in the light diffusing material on the side facing the light sources 146. The light sources 146 are preferably arranged to be aligned with these recesses. In the preferred embodiment the walls 150 are all of the same depth, and they may thus define an array of 'light boxes' or 'cages', which can be configured such that the light diffuser 118 encloses the light sources 146 on all sides but the side of the light source 146 array furthest from the main body 148 of the light diffuser 118, that is the side of the light sources 146 also furthest from the window 112. Each of said light boxes is able to receive by its inner surfaces 151 light from the light sources 146, particularly from a light source 146 sitting within it. Preferably there is one box or cage provided to align with each light source 146.

The light diffuser 118 according to the preferred embodiment is a translucent white plastics material with optical transmittance in the visible spectrum between 10% and 40%, more preferably between 20% and 30%. The light diffuser 118 will act to diffuse or spread the light depending on the optical dispersion of the material, the dimensions and structure of the material and/or the surface finishing. The light diffuser 118 is preferably RTP^{®} 0399X 120952 D S-27484 WHITE or a material with comparable transmittance and/or diffusive properties.

The light diffuser 118 is configured to receive and diffuse light from the light sources 146, such that the diffused light is visible through the non-opaque window 112 in the body 102. In general, an array of discrete light sources 146 when illuminated will generate a light field with 'hot spots', or areas of high light intensity corresponding to the positions of the illuminated light sources 146 in the array, and 'cold spots', or areas of lower light intensity corresponding to the spaces between said light sources 146. The light diffuser 118 is configured to diffuse light emitted by the light sources 146 to reduce the difference in light intensity between hot and cold spots. Diffusion of the light results in a smooth visible light signal generated by a discrete set of light sources 146, which is desirable for the aesthetic properties of the status indicator.

The status indicator is configured to convey information to the user, in one example, by varying the size of the light strip observable through the window 112. As such, it is desirable for the status indicator to be configured to localize the light field of each light source 146, so that as more light sources 146 are lit up a larger light strip is observable by the user and so that a single light source 146 or subset of light sources 146 will not illuminate the whole window 112. It is desirable to achieve this as well as smoothing out the hot and cold spots. The provision of the walls 150 extending between the light sources 146 may provide the advantage of allowing the status indicator to achieve both these desiderata. By absorbing the light emitted obliquely from the light sources 146 by means of its protruding walls 150 the light diffuser 118 may localise light from each individual light source 146 more effectively than if said walls 150 had not been provided. The light diffuser 118, particularly with the feature of the walls 150 extending between light sources 146, thus provides for a status indicator that can localize the light field of individual light sources 146 of an array, while still reducing the appearance of hot and cold spots in the visible signal of the status indicator. By varying, among other properties, the distance between, depth and thickness of the walls 150, the status indicator can comprise an appropriate number of light sources 146 to convey information to the user with a desired accuracy, by for example allowing control of the number and spacing of LEDs in the light source 146 array. The aesthetic appearance of the illuminated status indicator can also be so controlled, by preventing the hot and cold spots between light sources 146 and therefore providing a smoothly varying visual signal to a user.

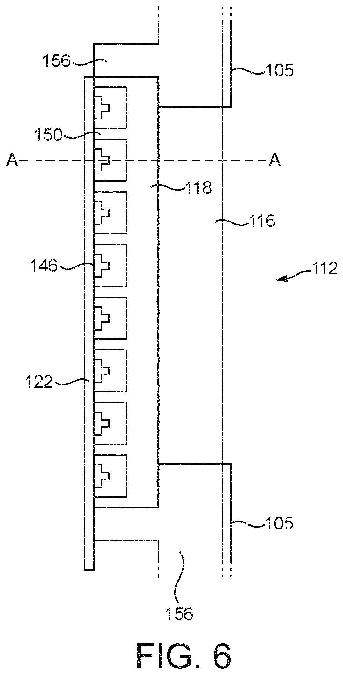

Referring to Figures 6, 7, and 8 the aerosol generation device 100 has a body 102 comprising an outer casing 105 and an inner casing 156. The aerosol generation device 100 also comprises an optical element 116. The body 102 of the aerosol generation device 100 has a window 112 through which light can be transmitted.

The inner casing 156 of the device 100 comprises an aperture aligned with an aperture of the outer casing 105 to form the window 112 of the body 102. Together the aligned apertures of the inner casing 156 and outer casing 105 provide a window 112 to the interior of the device 100.

The optical element 116 is provided disposed between the light diffuser 118 and the outside of the body 102, in the window 112. That is, light received by the optical element 116 from the light diffuser 118 is transmitted out through the non-opaque window 112. The optical element 116 may be configured to filter out certain wavelengths of light and/or to focus light such that the light transmitted through the aperture of the inner casing 156 leaves the device 100 by the window 112.

The optical element 116 may be a separate part to the light diffuser 118. The optical element 116 may be overmoulded onto or into the aperture of the inner casing 156. Alternatively the optical element 116 may be twin-shot melded onto the light diffuser 118, preferably onto the main body 148 of the light diffuser 118 on the side opposite to the side of the light diffuser 118 on which the walls 150 are disposed. In other alternatives the optical element 116 can be fixed in place by being disposed between the inner 156 and outer casing 105 of the body 102 or by fitting snugly within the aperture of the outer casing 105.

The optical element 116 is preferably a translucent material with optical transmittance in the visible spectrum of greater than 20%, preferably greater than 30%, more preferably greater than 50%; in preferred embodiments it has transmittance approximately 75%. The optical element 116 is preferably a polycarbonate material, for example Makrolon^{®}, RTP^{®}, Lexan^{®}, Covestro^{®}, most preferably Lexan^{®} GY5959X STD / Grade FXD171R / CMR# 039216, or a material with comparable transmittance properties. The optical element 116 may have a polished finish in order to maximize the transmittance of the object and to prevent further diffusion of the light. Preferably the optical element 116 is tinted such that it is unobtrusive or discrete to the user when the status indicator is not illuminated, that is, it blends in with the outer casing. It will be appreciated that in different embodiments the optical element 116 may be a filter, light lens, a prism or a combination of these things.

In some conditions, slightly roughened surfaces may improve light transmission out of a body, and impede light transmission into the body. Conversely, smooth surfaces may impede light transmission out of a body (i.e. retention of light inside the body) but may improve light transmission into the body. For this reason, surfaces of the light diffuser 118 closest to the light sources 146 may be smooth or polished so as to improve transmission of light from the light sources 146 to the light diffuser 118. Surfaces facing away from the light sources 146 can be roughened to draw light out from the device 100 towards the exterior. Similarly, surfaces at the edges of the light diffuser 118 may be polished or smooth to reduce leakage of light from the sides of the light diffuser 118. The side surfaces may further be provided with cladding to increase internal reflection at the sides and further reduce light leakage from the sides. Cladding typically has a lower refractive index than that of the material which it surrounds.

For similar reasons as given above, the surfaces of the optical element 116 may be roughened, smooth or polished. Side surfaces and surfaces closest to the light sources 146 may be smooth or polished, while surfaces furthest from the light sources 146 (closest to the exterior of the device) may be roughened. Cladding (not shown) may also be applied at the sides (or edges) of the optical element 116 to increase internal reflection at the edge and reduce light leakage at the edges of the optical element 116.

The optical element is less than 30 mm in height, preferably less than 20 mm in height, more preferably less than 17.5 mm in height. In the first preferred embodiment the optical element 116 is approximately 15 mm in height. The optical element 116 is less than 4 mm in width, preferably less than 3 mm in width, more preferably less than 2 mm in width. In the preferred embodiment the optical element 116 is approximately 1 mm in width. The optical element 116 is less than 5 mm in depth, preferably less than 4 mm in depth, more preferably less than 2 mm in depth. In the preferred embodiment the optical element 116 is approximately 1.5 mm in depth.

The aperture of the inner casing 156 may be configured such that an optical element 116 may sit within the aperture securely. The inner casing 156 may also be configured such that the light diffuser 118 sits within the aperture securely. Therefore, referring to Figure 7, the aperture of the inner casing 156 may comprise two differently sized portions at different depths to provide recesses in which both the light diffuser 118 and optical element 116 can sit securely. In the illustrated embodiment the aperture has a first portion 158 with a first height, a first width and a first depth on the side of the inner casing 156 closest to the outer casing 105; and, a second portion 160 with a second height, a second width and a second depth on the side closest to the interior of the aerosol generation device 100. The dimensions of the first portion 158 of the aperture substantially match those of the optical element 116, such that the optical element 116 can fit snugly inside it. The second height, width and depth of the aperture preferably match those of the light diffuser 118, such that the light diffuser 118 can fit snugly inside the second portion 160 of the aperture while abutting the optical element 116 disposed in the first portion 158 of the aperture. The walls of the aperture that define the depth of the second portion 160 of the aperture may extend further into the interior of the device 100 than other parts of the inner casing 156 to provide a recess able to accept the full depth of the light diffuser 118. In other words the inner casing 156 may be thicker around the periphery of the recess in which the light diffuser 118 sits than in other regions of the inner casing 156. The optical element 116 is a prism with cross section of a similar shape and dimensions to the first portion 158 of the aperture of the inner casing 156. That is, a prism with an elongate rectangular shaped cross section. The optical element 116 or optical filter can thus fit snugly within the first portion 158 of the aperture in the inner casing 156.

The linear array of light sources 146 is mounted on and/or electrically connected to a PCB 122 on a side of the PCB 122 facing the non-opaque window 112. The light sources 146 are equally spaced. The light diffuser 118 may be arranged such that the walls 150 extend between adjacent light sources 146 and abut the PCB 122 at a position on the PCB 122 between the light sources 146. The light sources 146 are therefore enclosed by the PCB 122 on a first side, furthest from the window 112, and on all other sides by the light diffuser 118.

In the first preferred embodiment the distance from the surface of the PCB 122 to which the light sources 146 are mounted to the outside of the body 102 is approximately 3 mm.

In this example of the status indicator the linear array of LEDs are configured to be lit up sequentially and incrementally, thus, the status indicator provides a smoothly varying strip of light visible to the user through the window 112 indicating a status of the device 100. The walls 150 extending between the light sources 146 allow for the light emitted from inside the user device 100 to be localized while also allowing for a smoothly (i.e. without hot and cold spots) varying strip of light visible to the user. This provides an easily understandable and visually appealing transfer of information to the user.

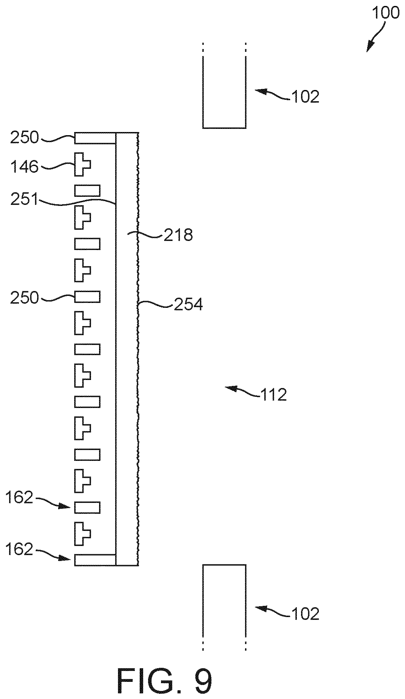

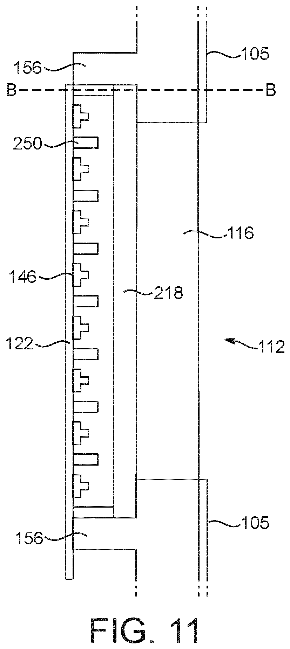

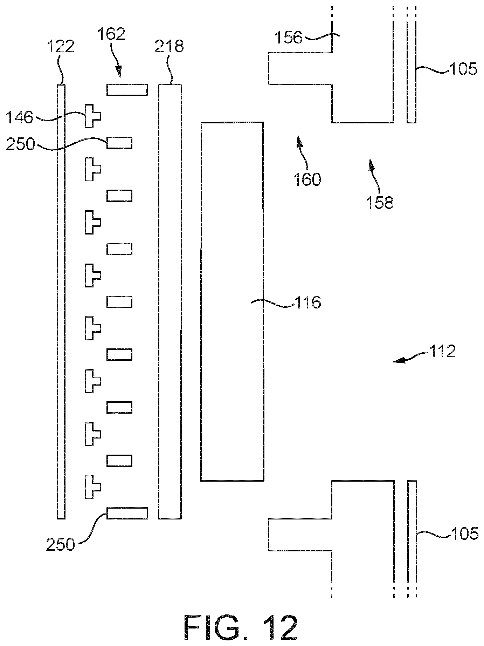

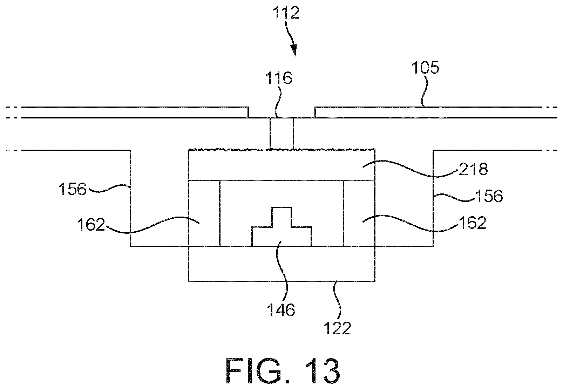

Referring to Figures 9 to 13, an aerosol generation device 100 according to a second preferred embodiment is identical to that of the first embodiment described with reference to Figure 4 to 8, except that the light diffuser 218 and the arrangement of walls 250 between the light sources 146 differ. In Figures 9 to 13 the reference numerals as used when describing the first embodiment are used to indicate the same or similar features.

In the second preferred embodiment the light diffuser 218 is provided in an interior region of the aerosol generation device 100 and is aligned with the window 112. In the illustrated embodiment the light diffuser 218 is aligned with the array of light sources 146 and disposed between the light sources 146 and the window 112. The light diffuser 218 has a cuboid or rectangular prism shape, one side of which faces the window 112 and one side of which faces the array of light sources 146. The light diffuser 218 extends over the array of light sources 146 and the window 112 and so the light diffuser 218 may have a greater height and width than both the window 112 and the array. The width and height of the light diffuser 218 can be varied to change the proportion of the light field of the light sources 146 incident on the light diffuser 218. A taller and wider light diffuser 218 receives a greater proportion of the emitted light from the light sources 146.

The light diffuser 218 in the second preferred embodiment is preferably less than 5 mm in depth, preferably less than 3 mm in depth, more preferably less than 2 mm in depth, yet more preferably less than 1 mm in depth. In the second preferred embodiment the light diffuser 218 is approximately 0.8 mm in depth. The light diffuser 218 is less than 50 mm in height, preferably less than 30 mm in height, more preferably less than 20 mm in height, yet more preferably is approximately 18.67 mm in height. The light diffuser 218 is less than 10 mm in width, preferably less than 7.5 mm in width, more preferably less than 6 mm in width, yet more preferably is approximately 5.5 mm in width.

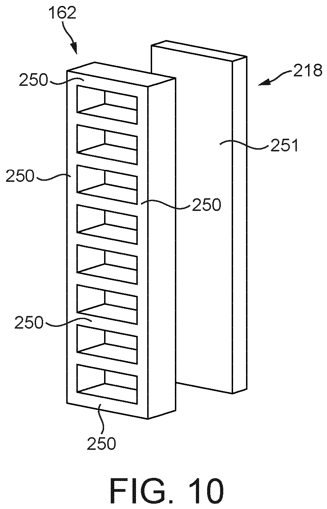

A divider 162 according to the second preferred embodiment is provided separately to the light diffuser 218. The divider 162 is disposed between the light diffuser 218 and the light sources 146. The divider 162 comprises walls 250 extending between the light sources 146. The divider 162 also comprises walls 250 above the uppermost light source 146 and the lowermost light source 146, and walls 250 which extend around the periphery of the light source 146 array such that the walls 250 form a single divider 162 structure as shown in perspective in Figure 10. In the illustrated second preferred embodiment the walls 250 disposed between adjacent light sources 146 extend to block all light paths between adjacent light sources 146.

The internal walls 250 of the divider 162, e.g. those disposed between adjacent light sources 146 may have a first depth, and the peripheral walls 250 of the divider 162 extending around the periphery of the array of light sources 146 may have a second depth. In the illustrated embodiment the first depth is less than the second depth and the light diffuser 218 abuts the peripheral walls 250 of the divider 162, for example contacting the peripheral walls 250 of the divider 162 at the edge of a light receiving surface 251.

In the second preferred embodiment the first depth (corresponding to the depth of the internal walls of the divider) is approximately 2 mm. In the second preferred embodiment the second depth (corresponding to the depth of the peripheral walls of the divider) is approximately 2.5 mm. The divider 162 is less than 50 mm in height, preferably less than 30 mm in height, more preferably less than 20 mm in height, yet more preferably is approximately 18.67 mm in height. The divider 162 is less than 10 mm in width, preferably less than 7.5 mm in width, more preferably less than 6 mm in width, yet more preferably is approximately 5.5 mm in width.

In the second preferred embodiment the distance from the surface of the PCB 122 to which the light sources 146 are mounted to the outside of the body 102 is approximately 4.5 mm.

As with the first embodiment, the parameters of the status indicator (dimensions, material types, light source 146 spacing and number, etc.) are all interrelated, in the sense that the exact size and shape of one element, once fixed, will impact on the size of the other elements. In general making one element larger will result in the other elements also becoming larger. In theory, the entire device can be scaled in size keeping the proportions the same, within a limited range of scale factors. In doing this, an important parameter is the spacing between light sources 146. In order to provide a smooth blurring between adjacent light sources 146, the spacing cannot be too large or there will be notable dimmer patches between adjacent light sources 146. To a degree this can be balanced by using brighter light sources 146 and/or altering the diffusivity of the light diffuser 218. In other cases, the solution may be to retain the light source 146 spacing of around 2 mm centre to centre, and provide more light sources 146 for larger versions of the status indicator or fewer light sources 146 for smaller versions of the status indicator.

In the second preferred embodiment the divider 162 has a lower transmittance than the light diffuser 218. Preferably the divider 162 is opaque and is made of an opaque material. The opaque material may be a black plastics material. The opaque walls 250 extending between light sources 146 serve to localise the light from the light sources 146, e.g. prevent a single light source 146 from illuminating the entire window 112. Hot spots in the light field occur aligned with the light sources 146 and cold spots in the light field occur aligned with the walls 250.

The light diffuser 218 is configured to diffuse light and may comprise a diffusing material and/or a roughened surface 254 to scatter the light transmitted through it (e.g. to VDI values of 21 to 30, for example). The surface of the light diffuser 218 closest to the light source 146 array maybe be polished or glossed to promote light entering the light diffuser 218 from the light sources 146. The light diffuser 218 is configured to provide the advantage of blending or smoothing the hot and cold spots of the light field of the light source 146 array together. The light signal observed through the window 112 therefore is smooth strip of light, with the contrast between hot and cold spots substantially or entirely reduced.

It will be appreciated that the second preferred embodiment may provide an improved localisation of the light from each light source 146 to the first preferred embodiment. A possible disadvantage in comparison to the first preferred embodiment is that the status indicator of the second preferred embodiment has a greater depth and may thus be more difficult to fit within the interior of the body 102.

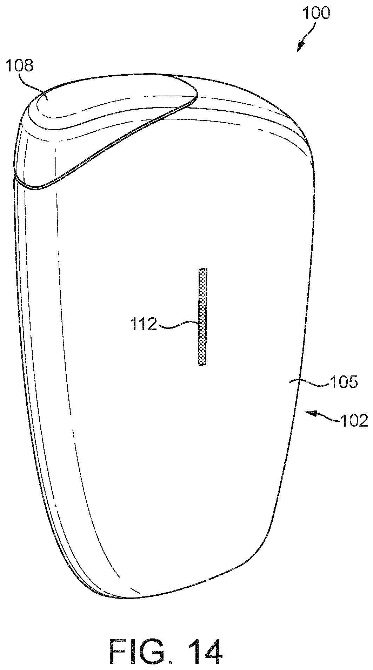

Figure 14 shows the closure 108 in the closed position. The aerosol generation device 100 is configured in this position to be in an 'off' mode. The status indicator is configured to be inoperable with the closure 108 in this position. Preferably this means the array of light sources 146 is configured not to draw power from the power source 120. The provision of the optical element 116 in the window 112 of the body 102 allows for the window 112 to appear unobtrusive or invisible to the user with the closure 108 in the closed position.

In the present embodiment, when in the off mode, the aerosol generation device 100 runs in a low power or no power mode. In this mode, the only function that is working is the detector module 138 and detector, to detect when the closure 108 moves to the open position. As such the status indicator draws no power from the power source 120 and is not configured to indicate a status of the aerosol generation device 100 to a user. This has the advantage of drawing as little power as possible from the power source 120 when the aerosol generation device 100 is not being used or operated by the user. In other embodiments, the status indicator may draw some power in low power mode for the purposes of indicating a status of the device 100 to the user.

In use, therefore, with the closure 108 in the closed position the light sources 146 of the status indicator are not emitting light and the status indicator is not illuminated.

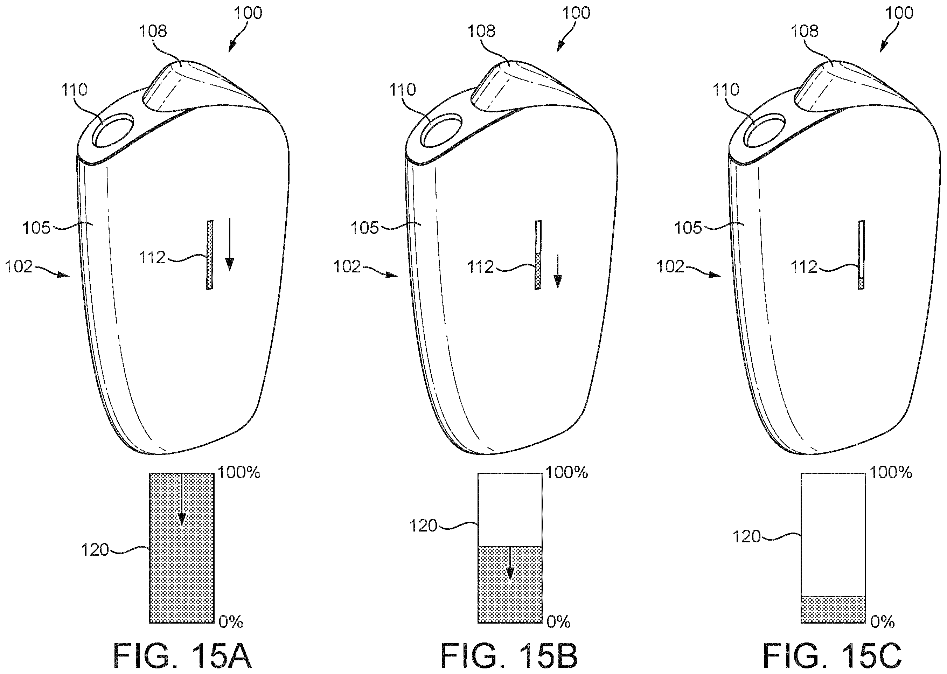

Figure 15 shows the closure 108 in the open position. In this configuration the control electronics of the aerosol generation device 100 may provide power to the light sources 146 of the status indicator, such that the status indicator is operable with the closure 108 in this open position. In the illustrated embodiment, in the open position the light sources 146 are configured to provide an indication to the user of the power level in the power source 120.

When the power source 120, e.g. battery, is fully charged the status indicator is configured to be fully illuminated with all of the light sources 146 switched on to emit light. As the charge remaining in the power source 120 decreases the number of light sources 146 that are illuminated decreases. When the power source 120 has no remaining charge no light sources 146 will emit light. When the charge is low, one or more light sources 146, preferably the light source 146 closest to the first end 104 of the aerosol generation device 100, may be configured to flash or blink to indicate to the user that the power source 120 is in need of charging.

In the preferred embodiment the number of light sources 146 which are lit up is incremented sequentially such that increasing battery level is indicate by a strip of light visible to the user through the window 112 which increases in height from the bottom of the window 112 towards the top of the window 112 as further light sources 146 are switched on as battery level increases.

In use, with the closure 108 in the open position the light sources 146 of the status indicator emit light in dependence on the battery level. The number of light sources 146 emitting light is proportional to the power remaining in the battery. The light sources 146 in the linear array extinguish sequentially from the top end to the bottom end of the array as the battery drains from fully charged. When the final (bottom) light source 146 is the only illuminated light source 146 it may flash to indicate to the user that the battery level has dropped below a threshold value. The light sources 146 may also be configured to flash or continuously emit different coloured light as the battery level changes.

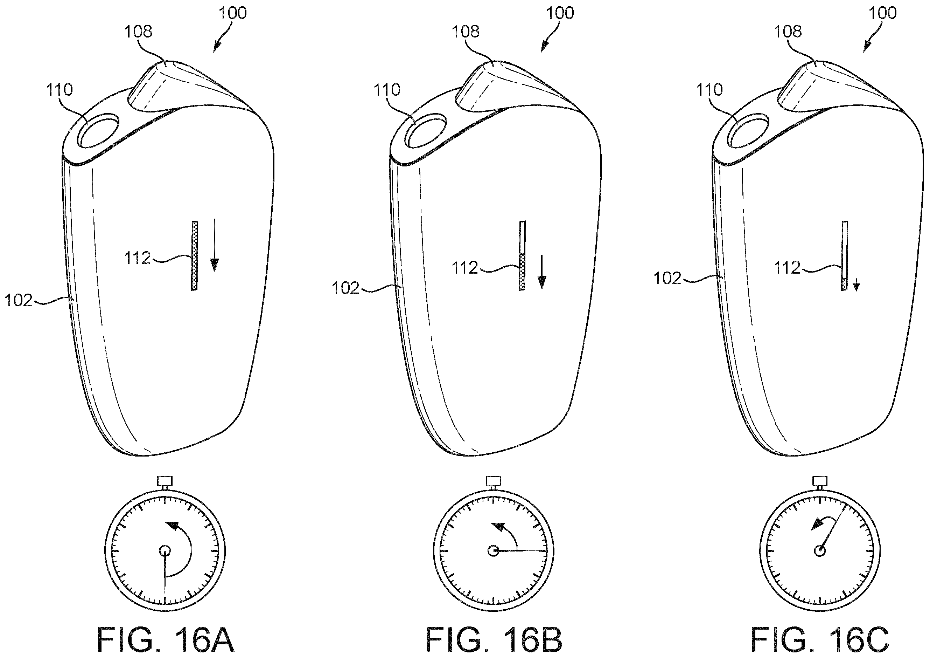

As shown in Figure 16 in a third or 'activation' position of the closure 108, or in an otherwise activated state of the device 100, the status indicator can be optionally configured to operate with a second function.

In this example, with the aerosol generation device 100 activated, the CPU 130 is configured to enable the heating module 136 to generate aerosol and therefore enable a user to inhale the aerosol. Additionally the CPU 130 is configured to operate the status indicator to indicate to the user that a session has begun.

In the illustrated embodiment, with the closure 108 in the activation position the status indicator is operable to indicate the remaining time in a user session, that is the remaining time during which the user can 'puff' to inhale aerosol. At the beginning of a user session all the light sources 146 are emitting light, as the remaining time in the user session decreases light sources 146 are sequentially incrementally turned off, or stop emitting light, from top to bottom. In an alternative, rather than a remaining time, the status indicator can be configured to indicate a remaining number of puffs.

A person skilled in the art will appreciate that many different combinations of embodiments described with reference to Figures 1 to 16 may be used alone unmodified and/or modified to incorporate features of other embodiments.

The aerosol generation device 100 could equally be referred to as a "heated tobacco device", a "heat-not-burn tobacco device", a "device for vaporising tobacco products", and the like, with this being interpreted as a device suitable for achieving these effects. The features disclosed herein are equally applicable to devices which are designed to vaporise any aerosol substrate.

The described embodiments of the invention are only examples of how the invention may be implemented. Modifications, variations and changes to the described embodiments will occur to those having appropriate skills and knowledge. These modifications, variations and changes may be made without departure from the scope of the claims.

## Claims

1. An aerosol generation device (100) comprising:
a body (102) having a non-opaque window (112);
an array of light sources (146) located inside the body (102);
a light diffuser (118) disposed between the array of light sources (118) and the non-opaque window (112); and
a plurality of walls (150) extending between the light sources (146); wherein
the plurality of walls (150) comprise a light diffusing material; **characterized in that**
each light source (146) of the array is surrounded by the light diffuser (118) and one or more of the plurality of walls (150) on all sides apart from a side of the light source facing in a direction opposite to a shortest direct path from the array of light sources (146) to the non-opaque window (112).

2. The aerosol generation device (100) of claim 1, wherein the light diffuser (118) comprises the same light diffusing material as the plurality of walls (150), preferably wherein the light diffuser (118) and the plurality of walls (150) comprise a single contiguous piece.

3. The aerosol generation device (100) of claim 2, wherein the light diffusing material is a white translucent material, preferably a polycarbonate.

4. The aerosol generation device (100) of any one of the preceding claims, wherein the light sources (146) are configured to direct light towards the non-opaque window (112).

5. The aerosol generation device (100) of any one of the preceding claims, wherein the light diffuser (118) is configured to receive light from the light sources (146) and to transmit it towards the non-opaque window (112).

6. The aerosol generation device (100) of any one of the preceding claims, wherein the walls (150) are configured to receive light emitted obliquely from the light sources (146) to limit spillage of the light from each light source (146) along the array.

7. The aerosol generation device (100) of any one of the preceding claims, wherein the array of light sources (146) is a linear array.

8. The aerosol generation device (100) of any one of the preceding claims, wherein the light sources (146) of the array are light emitting diodes.

9. The aerosol generation device (100) of any one of the preceding claims, wherein each wall (150) of the plurality of walls (150) extends to obstruct a straight path of light between adjacent light sources (146) of the array.

10. The aerosol generation device (100) of any one of the preceding claims, wherein the light sources (146) are spaced approximately 2 mm apart.

11. The aerosol generation device (100) of any one of the preceding claims, wherein each wall (150) of the plurality of walls (150) has a length in a direction of a shortest direct path from the array of light sources (146) to the non-opaque window (112) of approximately 0.5 mm.

12. The aerosol generation device (100) of any one of the preceding claims, wherein the light sources (146) are located directly behind the non-opaque window (112).

13. The aerosol generation device (100) of any one of the preceding claims, wherein the light diffuser (118) extends over the array of light sources (146) and the non-opaque window (112).

14. The aerosol generation device (100) of any one of the preceding claims, wherein the light diffuser (118) has a greater height and width than the array of light sources (146) and the non-opaque window (112).

15. The aerosol generation device (100) of any one of the preceding claims, wherein at least one surface of the light diffuser (118) has a cladding, preferably wherein the cladding has a different refractive index to the light diffuser (118).

16. The aerosol generation device (100) of any one of the preceding claims, wherein at least one surface of the light diffuser (118) is a polished surface (151) or a smooth surface or a mirrored surface or a roughened surface (154).

17. The aerosol generation device (100) of any one of the preceding claims, wherein at least one surface of the light diffuser (118) is white or near white.

18. The aerosol generation device (100) of any one of the preceding claims, comprising an optical element (116) disposed between the light diffuser (118) and the non-opaque window (112), preferably wherein the optical element (116) is a lens or a light filter, preferably wherein the optical element (116) has a transmittance band between 400nm and 700nm.

## Patentansprüche

1. Aerosolerzeugungsvorrichtung (100), die Folgendes umfasst:
einen Körper (102) mit einem nicht opaken Fenster (112);
ein Array von Lichtquellen (146), die sich innerhalb des Körpers (102) befinden;
einen Lichtdiffusor (118), der zwischen dem Array von Lichtquellen (118) und dem nicht opaken Fenster (112) platziert ist; und
eine Vielzahl von Wänden (150), die sich zwischen den Lichtquellen (146) erstrecken; wobei
die Vielzahl von Wänden (150) ein lichtstreuendes Material umfasst; **dadurch gekennzeichnet, dass**
jede Lichtquelle (146) des Arrays auf allen Seiten außer einer Seite der Lichtquelle, die in eine zu einem kürzesten direkten Weg von dem Array von Lichtquellen (146) zu dem nicht opaken Fenster (112) entgegengesetzte Richtung weist, von dem Lichtdiffusor (118) und einer oder mehreren der Vielzahl von Wänden (150) umgeben wird.

2. Aerosolerzeugungsvorrichtung (100) nach Anspruch 1, wobei der Lichtdiffusor (118) das gleiche lichtstreuende Material wie die Vielzahl von Wänden (150) umfasst, wobei der Lichtdiffusor (118) und die Vielzahl von Wänden (150) vorzugsweise ein einziges zusammenhängendes Stück umfassen.

3. Aerosolerzeugungsvorrichtung (100) nach Anspruch 2, wobei das lichtstreuende Material ein weißes lichtdurchlässiges Material, vorzugsweise ein Polycarbonat, ist.

4. Aerosolerzeugungsvorrichtung (100) nach einem der vorhergehenden Ansprüche, wobei die Lichtquellen (146) derart ausgelegt sind, dass sie Licht in Richtung des nicht opaken Fensters (112) richten.

5. Aerosolerzeugungsvorrichtung (100) nach einem der vorhergehenden Ansprüche, wobei der Lichtdiffusor (118) derart ausgelegt ist, dass er Licht von den Lichtquellen (146) aufnimmt und zu dem nicht opaken Fenster (112) überträgt.

6. Aerosolerzeugungsvorrichtung (100) nach einem der vorhergehenden Ansprüche, wobei die Wände (150) derart ausgelegt sind, dass sie schräg von den Lichtquellen (146) abgestrahltes Licht empfangen, um einen Austritt des Lichts von jeder Lichtquelle (146) entlang des Arrays zu begrenzen.

7. Aerosolerzeugungsvorrichtung (100) nach einem der vorhergehenden Ansprüche, wobei das Array von Lichtquellen (146) ein lineares Array ist.

8. Aerosolerzeugungsvorrichtung (100) nach einem der vorhergehenden Ansprüche, wobei die Lichtquellen (146) des Arrays Leuchtdioden sind.

9. Aerosolerzeugungsvorrichtung (100) nach einem der vorhergehenden Ansprüche, wobei sich jede Wand (150) der Vielzahl von Wänden (150) derart erstreckt, dass sie einen geradlinigen Weg des Lichts zwischen benachbarten Lichtquellen (146) des Arrays versperrt.

10. Aerosolerzeugungsvorrichtung (100) nach einem der vorhergehenden Ansprüche, wobei die Lichtquellen (146) ungefähr 2 mm voneinander beabstandet sind.

11. Aerosolerzeugungsvorrichtung (100) nach einem der vorhergehenden Ansprüche, wobei jede Wand (150) der Vielzahl von Wänden (150) eine Länge in einer Richtung eines kürzesten direkten Wegs von dem Array von Lichtquellen (146) zu dem nicht opaken Fenster (112) von ungefähr 0,5 mm aufweist.

12. Aerosolerzeugungsvorrichtung (100) nach einem der vorhergehenden Ansprüche, wobei sich die Lichtquellen (146) direkt hinter dem nicht opaken Fenster (112) befinden.

13. Aerosolerzeugungsvorrichtung (100) nach einem der vorhergehenden Ansprüche, wobei sich der Lichtdiffusor (118) über das Array von Lichtquellen (146) und das nicht opake Fenster (112) erstreckt.

14. Aerosolerzeugungsvorrichtung (100) nach einem der vorhergehenden Ansprüche, wobei der Lichtdiffusor (118) eine größere Höhe und Breite als das Array von Lichtquellen (146) und das nicht opake Fenster (112) aufweist.

15. Aerosolerzeugungsvorrichtung (100) nach einem der vorhergehenden Ansprüche, wobei mindestens eine Oberfläche des Lichtdiffusors (118) eine Ummantelung aufweist, wobei die Ummantelung vorzugsweise einen anderen Brechungsindex als der Lichtdiffusor (118) aufweist.

16. Aerosolerzeugungsvorrichtung (100) nach einem der vorhergehenden Ansprüche, wobei mindestens eine Oberfläche des Lichtdiffusors (118) eine polierte Oberfläche (151) oder eine glatte Oberfläche oder eine gespiegelte Oberfläche oder eine aufgerauhte Oberfläche (154) ist.

17. Aerosolerzeugungsvorrichtung (100) nach einem der vorhergehenden Ansprüche, wobei mindestens eine Oberfläche des Lichtdiffusors (118) weiß oder nahezu weiß ist.

18. Aerosolerzeugungsvorrichtung (100) nach einem der vorhergehenden Ansprüche, die ein zwischen dem Lichtdiffusor (118) und dem nicht opaken Fenster (112) platziertes optisches Element (116) umfasst, wobei das optische Element (116) vorzugsweise eine Linse oder ein Lichtfilter ist, wobei das optische Element (116) vorzugsweise ein Transmissionsband zwischen 400 nm und 700 nm aufweist.

## Revendications

1. Dispositif de génération d'aérosol (100) comprenant :
un corps (102) présentant une fenêtre non opaque (112) ;
un réseau de sources lumineuses (146) situé à l'intérieur du corps (102) ;
un diffuseur de lumière (118) disposé entre le réseau de sources lumineuses (118) et la fenêtre non opaque (112) ; et
une pluralité de parois (150) s'étendant entre les sources lumineuses (146) ; dans lequel
la pluralité de parois (150) comprend un matériau diffusant la lumière ; **caractérisé en ce que**
chaque source lumineuse (146) du réseau est entourée par le diffuseur de lumière (118) et une ou plusieurs de la pluralité de parois (150) de tous les côtés sauf un côté de la source lumineuse orienté dans une direction opposée à un trajet direct le plus court entre le réseau de sources lumineuses (146) et la fenêtre non opaque (112).

2. Dispositif de génération d'aérosol (100) selon la revendication 1, dans lequel le diffuseur de lumière (118) comprend le même matériau diffusant la lumière que la pluralité de parois (150), le diffuseur de lumière (118) et la pluralité de parois (150) formant de préférence une seule pièce contiguë.

3. Dispositif de génération d'aérosol (100) selon la revendication 2, dans lequel le matériau diffusant la lumière est un matériau translucide blanc, de préférence un polycarbonate.

4. Dispositif de génération d'aérosol (100) selon l'une quelconque des revendications précédentes, dans lequel les sources lumineuses (146) sont configurées pour diriger la lumière vers la fenêtre non opaque (112).

5. Dispositif de génération d'aérosol (100) selon l'une quelconque des revendications précédentes, dans lequel le diffuseur de lumière (118) est configuré pour recevoir de la lumière en provenance des sources lumineuses (146) et pour la transmettre vers la fenêtre non opaque (112).

6. Dispositif de génération d'aérosol (100) selon l'une quelconque des revendications précédentes, dans lequel les parois (150) sont configurées pour recevoir la lumière émise obliquement à partir des sources lumineuses (146) pour limiter les pertes de lumière émise par chaque source lumineuse (146) le long du réseau.

7. Dispositif de génération d'aérosol (100) selon l'une quelconque des revendications précédentes, dans lequel le réseau de sources lumineuses (146) est un réseau linéaire.

8. Dispositif de génération d'aérosol (100) selon l'une quelconque des revendications précédentes, dans lequel les sources lumineuses (146) du réseau sont des diodes électroluminescentes.

9. Dispositif de génération d'aérosol (100) selon l'une quelconque des revendications précédentes, dans lequel chaque paroi (150) de la pluralité de parois (150) s'étend de manière à obstruer un trajet de lumière en ligne droite entre des sources lumineuses adjacentes (146) du réseau.

10. Dispositif de génération d'aérosol (100) selon l'une quelconque des revendications précédentes, dans lequel les sources lumineuses (146) sont espacées d'environ 2 mm.

11. Dispositif de génération d'aérosol (100) selon l'une quelconque des revendications précédentes, dans lequel chaque paroi (150) de la pluralité de parois (150) a une longueur dans une direction d'un trajet direct le plus court entre le réseau de sources lumineuses (146) et la fenêtre non opaque (112) d'approximativement 0,5 mm.

12. Dispositif de génération d'aérosol (100) selon l'une quelconque des revendications précédentes, dans lequel les sources lumineuses (146) sont situées directement derrière la fenêtre non opaque (112).

13. Dispositif de génération d'aérosol (100) selon l'une quelconque des revendications précédentes, dans lequel le diffuseur de lumière (118) s'étend par dessus le réseau de sources lumineuses (146) et la fenêtre non opaque (112).

14. Dispositif de génération d'aérosol (100) selon l'une quelconque des revendications précédentes, dans lequel le diffuseur de lumière (118) a une hauteur et une largeur supérieures à celles du réseau de sources lumineuses (146) et de la fenêtre non opaque (112).

15. Dispositif de génération d'aérosol (100) selon l'une quelconque des revendications précédentes, dans lequel au moins une surface du diffuseur de lumière (118) a un revêtement, lequel revêtement ayant de préférence un indice de réfraction différent de celui du diffuseur de lumière (118).

16. Dispositif de génération d'aérosol (100) selon l'une quelconque des revendications précédentes, dans lequel au moins une surface du diffuseur de lumière (118) est une surface polie (151) ou une surface lisse ou une surface miroir ou une surface rugueuse (154).

17. Dispositif de génération d'aérosol (100) selon l'une quelconque des revendications précédentes, dans lequel au moins une surface du diffuseur de lumière (118) est blanche ou presque blanche.

18. Dispositif de génération d'aérosol (100) selon l'une quelconque des revendications précédentes, comprenant un élément optique (116) disposé entre le diffuseur de lumière (118) et la fenêtre non opaque (112), lequel élément optique (116) étant de préférence une lentille ou un filtre de lumière, lequel élément optique (116) ayant de préférence une bande de transmittance comprise entre 400 nm et 700 nm.
